Europäisches Patentamt

European Patent Office

Office européen des brevets

(19)

(11) EP 1 471 107 A1

(12) EUROPEAN PATENT APPLICATION

(43) Date of publication:
27.10.2004 Bulletin 2004/44

(51) Int Cl.7: C08K 3/26, C08L 67/00

(21) Application number: 03009265.4

(22) Date of filing: 23.04.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(71) Applicant: NAN YA PLASTICS CORPORATION
Taipei (TW)

(72) Inventor: Jen, Zo-Chun
Tai-Shan Hsian, Taipei Hsien (TW)

(74) Representative:
Reinhard - Skuhra - Weise & Partner GbR
Postfach 44 01 51
80750 München (DE)

(54) **Polyester composition for reducing inter-bottle friction and polyester bottle manufactured form the same**

(57) This invention discloses a novel polyester resin composition containing $CaCO_3$ having inter-bottle friction reduction properties used to manufacture polyester bottles. The polyester resin composition contains preferably between 20-150ppm $CaCO_3$, which has a reflective index or refrangibility of 1.65, and particle grain size of preferably between 0.5 and 5 micrometers. The polyester/ $CaCO_3$ composition of this invention when used to manufacture polyester bottles reduces surface friction between polyester bottles during stacking, manufacturing transportation and commercial transportation while preserving commercially acceptable bottle transparency.

EP 1 471 107 A1

# EP 1 471 107 A1

**Description**

**Background of the invention**

This invention relates to a novel polyester resin composition use to manufacture polyester bottles. Specifically, this invention relates to a polyester resin composition containing $CaCO_3$ as inter-bottle friction reducing agent preferably between 20 ~ 150 ppm , which has a reflective index or refrangibility of 1.65 and particle of grain size preferably between 0.5 and 5μm. The polyester resin composition of this invention is first made into parison then subsequently blown molded into polyester bottles of desired shapes. The presence of $CaCO_3$ within the polyester resin composition use to manufacture polyester bottles reduces surface friction between bottles during stacking, manufacturing transportation and commercial transportation, while preserving good transparency.

**Prior arts**

Polyester has long been used to manufacture polyester bottles. The most used polyester is polyethylene terephthalate (hereafter "PET"). PET is the polyester of choice because of its friendly manufacturing nature, and its ability to produce polymer bottles having fine intensity and requisite transparency. To produce polyester bottles, usually PET resin are cut to form chips, the chips are formed into parisons through the use of injection molding technology, the parisons are heated and blown up to form polyester bottles. The manufactured bottles are transported from the blowing molding equipment by use of conveyor belts, stacked and conveyed to their desired destination. During stacking and transporting, bottles surfaces come into frequent contact with one another. When polyester bottle come in frequent contact they generate some form of adhesive bonding. Unwanted adhesive bonding between bottles promote higher inter-bottle friction and negatively influence bottle transportation and overall operational efficiency. When polyester bottles are filled with edible liquid or other forms of liquid and stacked together for transportation to commercial destination, increased inter-bottle friction often results. Some bottles are destroyed before reaching their commercial destination. Premature destruction of polyester bottles due to inter-bottle friction can have severe financial consequences on operational capital.

Many attempts have been made to design polyester bottles with the ability to reduce inter-bottle friction during manufacturing and commercial transportation. In U.S. Patent No. 5830544 amorphous $SiO_2$ used as anti-blocking agent is included in the polyester-resin composition to reduce inter-bottle friction and adhesive bonding. This approach is limited because only a small quantity of $SiO_2$ between 20 and 60 ppm, can be added to the polyester composition. Excessive addition of $SiO_2$ resulted in unacceptable commercial polyester bottles having reduced transparency.

Other types of inorganic agents have been included in polyester composition used to manufacture polyester bottles, but have largely been unsuccessful. For example, other types of inorganic agents have resulted in rougher polyester films, which when used to manufacture polyester bottles caused increased inter-bottle friction during stacking, manufacturing and commercial transporting.

Numerous prior arts which disclosed the use of inorganic agents within polyester composition having reduced inter-bottle surface friction characteristics. US patent No. 5935700 teaches that $SiO_2$, $TiO_2$, and $CaCO_3$ can be used to increase smoothness in polyester film surfaces by maintaining the addition level of inorganic particles in relations to the total polyester film composition at between 0.05 ~ 0.5 % weight. US patent No. 5674618 teaches that ZnO can be used to increase smoothness in polyester film surfaces by maintaining the level of ZnO inorganic particles in relation to the overall weight of the polyester film at between 0.01 and 5 % weight. A third patent, US patent No. 4595715, teaches that kaolin clay and $CaCO_3$ can be used to increase smoothness in polyester film surfaces. This patent describes inorganic particle addition level as follows:

$$1000ppm \leqq kaolin + CaCO_3 \leqq 10000 \ ppm$$

Finally US patent No. 5475046 teaches that $SiO_2$ and $Al_2O_3$ can be used to reduce friction coefficient of polyester film surfaces by maintaining the addition level of the inorganic agents in relation to the total amount of polyester film between 0.001 and 0.01 % weight of $SiO_2$ and 0.001 ~ 0.1 wt% of $Al_2O_3$ respectively.

Prior to this invention, all the prior arts geared towards reducing inter-bottle friction amongst polyester film surfaces have failed to achieve their desired objectives. The prior arts have failed to invent polyester bottles comprising polyester films with decreased coefficient of friction, films having enhanced levels of smoothness, films capable of reducing adhesive bonding and/or films with commercial acceptable transparency.

Therefore, it is an object of this invention to produce polyester films use to manufacture polyester bottles with a novel anti-blocking agent. Using this invention will enable polyester films/ bottles possess increase smoothness, will reduce inter-bottle friction, and will strongly preferred. The reflective index of the $CaCO_3$ use in this invention is preferably 1.65.

## Detailed description of the invention

Using preferred ranges and indicators of $CaCO_3$ as indicated by this invention will reduce surface inter-bottle friction amongst polyester bottles during stacking, commercial and manufacturing transportation while producing bottles with commercially acceptable transparency levels. $CaCO_3$ can be added to the polyester composition anytime during the manufacturing process. That is, during the dibasic acid and glycol mixing process. during the esterification reaction process, or during the polycondensation reaction process.

$CaCO_3$ and ethylene glycol (EO) are mixed to form a slurry then milled to form a homodisperse state without coagulation. The preparation concentration of $CaCO_3$ is between 1 and 50 % weight of the total mixture, preferably between 5 and 30 % of the total mixture.

It has been observed that when $CaCO_3$ addition is $\leqq$ 20 ppm, reduction in inter-bottle friction and adhesive bonding between polyester bottles are non-existent. When $CaCO_3$ addition is $\geqq$ 150 ppm, polyester composition used to manufacture polyester bottles possess poor and unacceptable level of transparency. Similarly, when the $CaCO_3$ particle size is $\leqq$ 0.5 $\mu$m, unobvious inter-bottle friction reduction and adhesive bonding are observed. and when $CaCO_3$ grain size is $\geqq$ 0.5 $\mu$m the polyester composition used to manufacture the polyester bottles failed to demonstrate acceptable commercial transparency levels.

Thus, the preferred addition of $CaCO_3$ in relations to the total polyester composition is between 20 to 150 ppm, preferably 40 to 100 ppm. The preferred grain size of $CaCO_3$ is preferably between 0.5 and 5 $\mu$m, although grain size between 1 and 3 $\mu$m is strongly recommended. Finally, $CaCO_3$ particles with reflective index of about 1.65 are preferred due to similar and more often equal to the reflective index of PET polyester.

A wide range of polyester resins can be used as starting materials for this invention. Generally polyester resins can be produced from esterification of a dibasic acid and a diol, or by transesterification of a diester such as dimethyl terephthalate (DMT) and a diol. The most used dibasic acid is terephthalic acid (TPA) and the most used diol is ethylene glycol (EO). It is well known that a polyester resin composition can consist of two or more dibasic acid and/ or two or more diols. Examples of acid ingredients that can be used to manufacture polyester resins of this invention are iso-phthalic acid, succinic acid. glutaric acid, adipic acid, sebacic acid or mixture of analog comprising any of the previously mentioned acid. Examples of diol ingredients that can be used to manufacture the polyester resin of this invention are diethylene glycol, 1,3 - propane glycol, 1,4.butane glycol or mixture of analog of any of the previously mentioned diols.

A common method of manufacturing polyester resins used in the manufacturing of polyester bottles is reacting terephthalic acid and ethylene glycol preferably between 210 to 240 °C to form monomer and water. Water is continuously removed during reaction of the terephthalic acid with the ethylene glycol. During this reaction, a catalyst is not required because adding a catalyst will only slightly speed up the reaction and reaction enhancement are not noticeable. However, addition of catalyst increases the undesired side product diethylene glycol (DEG). After finishing esterification of terephthalic acid and ethylene glycol, the reaction is subsequently subject to condensation reaction comprising a pre-polymerization reaction and a main polymerization reaction.

The pre-polymerization reaction occurs preferably between 270 -280°C and at an operating vacuum pressure preferably between 250-15 mmHg. The main polymerization occurs preferably between 275 to 285°C and at an operating vacuum pressure preferably below1mmHg. At these preferred temperatures and pressures the polycondensation reaction is successfully performed. At the end of polycondensation reaction of the PET melt phase, intrinsic viscosity (IV) value of PET polymer usually increases from about 0.5 to 0.7 dl/g. At this point, the polymer is uploaded to the cooling water bath for quick chilling and subsequently cut into cylindrical polyester chips.

In order to increase the intrinsic viscosity (IV) value of the PET polymer to obtain the desired polymer required to manufacture the polyester bottles, solid phase polymerization of the polyester chip is performed at 200°C in the presence of nitrogen gas atmosphere, which increases the IV value to between 0.7 to 1.1 d1/g, preferably between 0.72 to 0 .88 dl/g. If the temperature of the solid phase polymerization is lower than 200°C, the intrinsic viscosity (IV) value slowly increases or even not to proceed the solid phase polymerization. At temperatures below 200°C the chances of performing a successful solid phase polymerization reaction needed to produce the desired polymer films are greatly reduced. The next series of steps involve crystallizing and drying the polyester chips, molding the polyester chips into parison through the use of bottle blowing machine, and then blowing the polyester chips to obtain bottles of desired shapes.

Reacting $CaCO_3$ with the polyester resin composition between the preferred ranges disclosed in this invention have been found to improve inter-bottle friction of produced polyester bottles and enhance its transparency. Thus. mixing a polyester resin composition with inorganic $CaCO_3$ particles using the latter preferred weight percentage, the preferred reflective index, the latter preferred particle grain size, at the latter preferred operating temperatures and pressures, along with a composition admixture having the requisite intrinsic viscosity have been found to positively influence the objective of manufacturing polyester composition with reduced inter-bottle friction and enhanced transparency. In short, the preferred sizes, temperatures, intrinsic viscosities, and weight percentages of this invention are critical to achieving this present invention.

Other forms of additive can be added along with inorganic $CaCO_3$ particles to the polyester resin composition. These additives include, but are not limited, to thermal stabilizer, light stabilizer, dye, colorant, plasticizer, antioxidant, infra red absorbents and anti-ultraviolet agents, etc. Using $CaCO_3$ with additional additive, for example plasticizer, still maintained transparency and reduced inter-bottle friction in manufactured polyester bottles.

Static friction coefficient and kinetic friction coefficient of manufactured polyester bottles were measured using friction coefficient instrumentation such as the ASTM D 1894- 78. The bottles were tested for static friction and kinetic friction coefficients by cutting 7 $cm^2$ piece from the bottles molded by polyester chips, and then fastening said piece to a test sled of a friction coefficient instrument. Additional 35 cm x 13.5 cm piece were cut from the polyester bottles to be tested and fastened to a test sled and placed on the stage of the friction coefficient instrument. The sled containing cut piece was placed on the test stage, and pulled with a fixed speed of 20 cm/min to test the static friction coefficient and kinetic friction coefficient of the manufactured polyester bottle(s). The relationship between friction coefficient p. and friction force F is F = μ x 200g, where the latter (200g) is the sled weight. The static friction coefficient, which is the strength required to remove static sled, is calculated by using the formula F = μ x 200g. The kinetic friction coefficient which is the friction during the movement of the sled is calculated by using the formula F = μ x 200g. Based on the relationship between the friction coefficient and the friction force, the less the friction the less the friction coefficient is and the less the extent of adhesive bonding between polyester bottles surfaces. There is a direct correlation between the friction correlation and the frictional force.

Finally, comparison between $CaCO_3$ and $SiO_2$ produced polyester films/polyester bottles revealed the former with considerable advantages in reducing film surface friction and haze generated during manufacturing. For example, US Patent No. 5830544 discloses that using amorphous $SiO_2$ between 0.001 and 0.01 wt% of the total mixture as anti-blocking agent can reduce inter-bottle friction and adhesive bonding.

Based on the exploitation and comparison examples delineated below, addition of $CaCO_3$ and $SiO_2$ at 100ppm respectively resulted in $CaCO_3$ produced films having a lower coefficient of friction. Similarly, addition of $CaCO_3$ at 100ppm resulted in manufactured polyester films with less haze than polyester films manufactured with $SiO_2$ at comparable addition levels.

The equipment used in conducting the haze test is the COLOR AND COLOR DIFFERENCE METER, MODEL 1001DP manufactured by NIPPON DENSHOKU KOGYO CO., LTD.

**Examples**

PET oligomers 12.11 Kg and EG 3.87 Kg were added into a electric heated stainless steel 30 litre reactor, agitated and heated under atmosphere to 260°C, and EG in the amount of 1200 ~ 1400ml is collected. The PET oligomers were obtained by reacting PTA and EG. Prior to the polycondensation reaction, the following ingredients were added: polycondensation catalyst of 450 ppm antimony acetate, 140 ppm cobalt acetate and $CaCO_3$ having an average particle size of 2 μm. To effectively analyze the impact of $CaCO_3$ on the polyester composition, three addition levels of $CaCO_3$ were adopted: 100ppm, 50ppm and 20ppm respectively.

The process steps are as follows: a reactor was vacuumed to pressure below 1mmHg to perform the pre-polymerization reaction at a temperature of 270°C, and to perform the main polymer reaction at 280 °C to produce the co-polyester resins; the intrinsic viscosity of the co-polyester was controlled between 0.6 ~ 0.64dl/g; the resulting polymer was cut into chips. dried and crystallized for 6 hours under 180°C nitrogen atmosphere; and the mixture underwent solid phase polycondensation reaction at a temperature of 225°C for 20 hours to get polyester chips having an intrinsic viscosity between 0.76 ~0.86dl/g.

The polyester chips thus obtained after solid phase polycondensation reaction were processed into polyester bottles by 280°C injection molding machine. The friction coefficient and haze of the polyester bottles produced from the three $CaCO_3$ adding levels were measured by using the ASTM D1894 - 78 method and the MODEL 1001 DP instrumentation respectively and shown in the following table.

| $CaCO_3$ adding levels | static friction coefficient | kinetic friction coefficient | Haze value |
|---|---|---|---|
| 100ppm | 0.386 | 0.283 | 4.4 |
| 50ppm | 0.608 | 0.316 | 2.4 |
| 20ppm | 1.409 | 0.761 | 1.1 |

**Comparative example**

PET oligomers 12.11 Kg and EG 3.87 Kg were added into a electric heated stainless steel 30 litre reactor, agitated and heated under atmosphere to 260°C, and EO in the amount of 1200 ∼ 1400ml is collected. The PET oligomers were obtained by reacting PTA and EG. Prior to the polycondensation reaction, the following ingredients were added: polycondensation catalyst of 450 ppm antimony acetate, 140 ppm cobalt acetate and $SiO_2$ having an average particle size of 1.3 μm. To effectively analyze the impact of $SiO_2$ on the polyester composition. three addition levels of $SiO_2$ were adopted: 100 ppm, 50 ppm and 20 ppm respectively.

The process steps are as follows: a reactor was vacuumed to pressure below 1mmHg to perform the pre-polymerization reaction at a temperature of 270°C , and to perform the main polymer reaction at 280°C to produce the co-polyester resins; the intrinsic viscosity of the co-polyester was controlled between 0.6 ∼ 0.64dl/g; the resulting polymer was cut into chips, dried and crystallized for 6 hours under 180°C nitrogen atmosphere; and the mixture underwent solid polycondensation reaction at a temperature of 225°C for 20 hours and with an intrinsic viscosity between 0.76 ∼ 0.86d1/g.

The polyester chips thus obtained after solid polycondensation reaction were processed into polyester bottles by 280°C injection molding machine. The friction coefficient and haze of the polyester bottles produced from the three $SiO_2$ adding levels were measured by using the ASTM D 1894 - 78 method and the MODEL 1001 DP instrumentation respectively and shown in the following table.

| $SiO_2$ adding levels | static friction coefficient | kinetic friction coefficient | Haze value |
|---|---|---|---|
| 100ppm | 0.437 | 0.375 | 6.1 |
| 50ppm | 0.437 | 0.370 | 3.4 |
| 20ppm | 0.679 | 0.378 | 1.5 |

**Claims**

1.  A polyester-resin composition having inter-bottle friction reducing properties used for manufacturing polyester bottles and capable of being shaped into parison by blow molding comprising the following:

    (a) polyester; and
    (b) inorganic particles $CaCO_3$ having a reflective index or refrangibility of 1.65, and particle grain size between 0.5 and 5 μm in an amount between 20 and 150 ppm.

2.  The polyester-resin composition according to claim 1, wherein said polyester is made of polyethylene terephthalate and modified polyethylene terephthalate.

3.  The polyester-resin composition according to claim 1, wherein the addition level of $CaCO_3$ to the polyester-resin composition is between 40∼100 ppm.

4.  The polyester-resin composition according to claim 1, wherein the particle size of said $CaCO_3$ particles is between 1∼3 μm.

5.  The polyester-resin composition according to claim 1, consisting essentially of thermal stabilizer, light stabilizer, dye, colorant, plasticizer, antioxidant, infra-red absorbents and anti-ultraviolet agents.

6.  A polyester bottle, which is manufactured by molding the polyester chips from the polyester-resin composition according to claim 1 into parison, and then blowing the parison to obtain bottles of desired shapes.

**European Patent Office**

## EUROPEAN SEARCH REPORT

Application Number

EP 03 00 9265

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2002/077405 A1 (MOORE TONY CLIFFORD ET AL) 20 June 2002 (2002-06-20)<br>* claims 1,2,4 *<br>--- | 1-6 | C08K3/26<br>C08L67/00 |
| X | EP 0 488 603 A (TEIJIN LTD)<br>3 June 1992 (1992-06-03)<br>* claim 1; examples 4,5 *<br>--- | 1-5 | |
| X | US 3 884 870 A (DODSON KEITH D ET AL)<br>20 May 1975 (1975-05-20)<br>* column 1, line 1-3; example 9 *<br>----- | 1-5 | |
| | | | TECHNICAL FIELDS SEARCHED (Int.Cl.7)<br><br>C08K<br>B29C<br>C08J |

The present search report has been drawn up for all claims

| Place of search | Date of completion of the search | Examiner |
|---|---|---|
| MUNICH | 11 August 2003 | Marquis, D |

**EP 1 471 107 A1**

## ANNEX TO THE EUROPEAN SEARCH REPORT
## ON EUROPEAN PATENT APPLICATION NO.

EP 03 00 9265

This annex lists the patent family members relating to the patent documents cited in the above-mentioned European search report.
The members are as contained in the European Patent Office EDP file on
The European Patent Office is in no way liable for these particulars which are merely given for the purpose of information.

11-08-2003

| Patent document cited in search report | | Publication date | Patent family member(s) | | Publication date |
|---|---|---|---|---|---|
| US 2002077405 | A1 | 20-06-2002 | AU | 3091602 A | 24-06-2002 |
| | | | WO | 02051616 A2 | 04-07-2002 |
| | | | WO | 0248262 A2 | 20-06-2002 |
| | | | US | 2002156157 A1 | 24-10-2002 |
| | | | US | 2002156158 A1 | 24-10-2002 |
| EP 0488603 | A | 03-06-1992 | DE | 69131923 D1 | 24-02-2000 |
| | | | DE | 69131923 T2 | 05-10-2000 |
| | | | EP | 0488603 A2 | 03-06-1992 |
| | | | JP | 5043716 A | 23-02-1993 |
| | | | US | 5196472 A | 23-03-1993 |
| US 3884870 | A | 20-05-1975 | AU | 8284275 A | 13-01-1977 |
| | | | BE | 831399 A1 | 15-01-1976 |
| | | | BR | 7504472 A | 06-07-1976 |
| | | | CA | 1052492 A1 | 10-04-1979 |
| | | | CH | 609073 A5 | 15-02-1979 |
| | | | DE | 2530979 A1 | 05-02-1976 |
| | | | DK | 318675 A ,B, | 16-01-1976 |
| | | | FI | 752045 A | 16-01-1976 |
| | | | FR | 2278725 A1 | 13-02-1976 |
| | | | GB | 1459810 A | 31-12-1976 |
| | | | IN | 143868 A1 | 18-02-1978 |
| | | | IT | 1039253 B | 10-12-1979 |
| | | | JP | 1355063 C | 24-12-1986 |
| | | | JP | 51034272 A | 23-03-1976 |
| | | | JP | 59008216 B | 23-02-1984 |
| | | | NL | 7507604 A ,B, | 19-01-1976 |
| | | | NO | 752513 A ,B, | 16-01-1976 |
| | | | SE | 403297 B | 07-08-1978 |
| | | | SE | 7508049 A | 16-01-1976 |

EPO FORM P0459

For more details about this annex : see Official Journal of the European Patent Office, No. 12/82

7